Europäisches Patentamt

European Patent Office

Office européen des brevets

(19)

(11) Numéro de publication : **0 650 277 A1**

(12) **DEMANDE DE BREVET EUROPEEN**

(21) Numéro de dépôt : **94402234.2**

(22) Date de dépôt : **05.10.94**

(51) Int. Cl.⁶ : **H04L 5/06, H04B 7/005**

(30) Priorité : **22.10.93 FR 9312721**

(43) Date de publication de la demande :
**26.04.95 Bulletin 95/17**

(84) Etats contractants désignés :
**DE ES GB IT NL**

(71) Demandeur : **Société d'Etudes de Téléinformatique et Communications Systèmes, S.E.T.I.C.S.**
**194, rue de Tolbiac**
**F-75013 Paris (FR)**

(72) Inventeur : **Leclair, Philippe**
**3, rue Jean-Charles Persil**
**F-92160 Antony (FR)**
Inventeur : **Tordjman, Nathalie**
**19, rue Vergniaud**
**F-75013 Paris (FR)**

(74) Mandataire : **Cabinet Martinet & Lapoux**
**BP 405**
**F-78055 Saint Quentin en Yvelines Cédex (FR)**

(54) **Procédé et dispositif de correction de signal numérique dans un récepteur utilisant une base de fonctions orthogonales.**

(57) Un procédé de correction de signal numérique est mis en oeuvre dans un récepteur notamment pour corriger un signal reçu résultant d'un signal émis à travers un milieu de propagation présentant une sélectivité en fréquence variable temporellement. Le signal émis comprend des symboles de référence et des symboles d'information. Le procédé comprend la correlation de symboles de référence $(SBR_{m,nb})$ du signal reçu par une base de fonctions orthogonales $(F_{m,nb})$ en des coordonnées $(CR_{m,nb})$, le calcul de la fonction de transfert du milieu de propagation en fonction desdites coordonnées, le calcul du complexe conjugué $(FT^*)$ de ladite fonction de transfert, et la multiplication des symboles d'information $(SIR_{m,ni})$ par le complexe conjugué de la fonction de transfert.

FIG. 7

La présente invention concerne d'une manière générale les systèmes émetteurs et récepteurs de transmission numérique à haute fréquence et plus particulièrement des systèmes de transmission par support radioélectrique et/ou hertzien.

Il est connu que la transmission par propagation dans l'atmosphère se traduit par un phénomène de trajets multiples provoqués par des réflexions sur le sol ou des irrégularités atmosphériques. Lorsqu'un signal est émis dans un milieu de propagation entre un émetteur et un récepteur, le récepteur reçoit un signal qui est le résultat d'une multitude de signaux ayant effectué des trajets différents et retardés les uns par rapport aux autres. Les trajets multiples sont une cause d'évanouissement ou "fading", c'est-à-dire l'amplitude du signal reçu varie en fonction de la fréquence entre des valeurs plus faibles (évanouissement) ou plus grandes que celle du signal qui serait reçu en l'absence des trajets multiples. Il y a donc sélectivité en fréquence du milieu de propagation. Dans le cas de la propagation en non visibilité directe, la sélectivité en fréquence existe en permanence et de plus évolue avec le temps.

La sélectivité en fréquence d'un milieu de propagation est nuisible au rendement spectral, exprimé en bit/s/Hz, soit pour une bande de fréquence donnée, au débit. A titre d'exemple, des systèmes connus en HF ionosphérique ont un débit maximal de 1,2 ou 2,4 kbit/s dans la bande de 3 à 30 MHz. Pour améliorer le rendement spectral, des moyens tels qu'égaliseurs autoadaptatifs, récepteur en diversité spatiale ou sondeurs ionosphériques ont été proposés. Ces moyens sont coûteux, volumineux et sont d'une mise en oeuvre délicate ; en outre, dans le cas d'un milieu de propagation présentant une sélectivité en fréquence évoluant rapidement dans le temps, ces moyens sont mal adaptés et n'augmentent en pratique que faiblement le débit.

La présente invention vise à fournir un procédé de correction de signal numérique qui corrige un signal transmis dans un milieu de propagation offrant une sélectivité en fréquence évoluant rapidement avec le temps.

A cette fin, un procédé de correction d'un signal reçu résultant de la transmission d'un signal numérique émis à travers un milieu de propagation est caractérisé en ce que le signal émis comprend des symboles de référence et des symboles d'information, et en ce que le procédé comprend la corrélation de symboles de référence du signal reçu par une base de fonctions orthogonales en des coordonnées, le calcul de la fonction de transfert du milieu de propagation en fonction desdites coordonnées, le calcul du complexe conjugué de ladite fonction de transfert, et la multiplication des symboles d'information du signal reçu par le complexe conjugué de la fonction de transfert.

Le signal émis comprend alternativement des mots de référence incluant des symboles de référence en nombre prédéterminé et des paquets d'information incluant des symboles d'information en nombre prédéterminé. De préférence, le signal émis comprend des trames comprenant une séquence de synchronisation de trame et au moins un champ d'information contenant un mot de référence et un paquet d'information.

Les symboles de référence sont avantageusement des séquences binaires pseudo-aléatoires de longueur maximale qui possèdent les propriétés de porter une grande "quantité d'information" permettant une bonne identification du milieu et d'être faciles à produire par calculateur.

L'invention concerne également un dispositif de réception de signal numérique pour la mise en oeuvre du procédé de correction, caractérisé en ce qu'il comprend un moyen pour extraire du signal reçu les symboles de référence et les symboles d'information, un moyen de corrélation pour déterminer des coordonnées des symboles de référence extraits sur une base de fonction orthogonale, un moyen pour sommer des produits desdites coordonnées et desdites fonctions orthogonales afin d'en déduire la fonction de transfert du milieu de propagation et le carré du module de ladite fonction de transfert et le complexe conjugué de ladite fonction de transfert, et un moyen pour multiplier lesdits symboles d'information par le complexe conjugué de ladite fonction de transfert afin de former des symboles d'information corrigés.

Le dispositif de réception de signal numérique comprend également un premier moyen désentrelaceur pour désentrelacer les carrés de module de fonction de transfert et les symboles d'information corrigés, un premier moyen pour décoder lesdits symboles d'information corrigés et désentrelacés par la minimisation d'un critère quadratique notamment en fonction des carrés de module désentrelacés, un second moyen désentrelaceur pour désentrelacer les symboles d'information décodés et un second moyen pour décoder les symboles d'information décodés et désentrelacés. Le second moyen pour décoder effectue un décodage linéaire en bloc des symboles d'information décodés et désentrelacés.

Selon un autre aspect de l'invention, un dispositif d'émission de signal numérique vers un dispositif de réception selon l'invention est caractérisé en ce qu'il comprend un moyen pour coder un signal numérique en des symboles d'information par un codage linéaire en bloc, un premier moyen entrelaceur pour entrelacer lesdits symboles d'information, un moyen pour moduler les symboles d'information entrelacés, un second moyen entrelaceur pour entrelacer les symboles d'information modulés et un moyen de formatage pour formater les symboles d'information modulés et entrelacés en un signal émis comprenant alternativement des symboles de référence et les symboles d'information modulés et entrelacés.

D'autres caractéristiques et avantages de la présente invention apparaîtront plus clairement à la lecture de la description suivante de plusieurs réalisations préférées de l'invention en référence aux dessins annexés correspondants dans lesquels :

- les figures 1 et 2 sont des blocs-diagrammes d'un émetteur et d'un récepteur pour transmission numérique selon l'invention ;
- la figure 3 est un bloc-diagramme d'un circuit de codage inclus dans l'émetteur de la figure 1 ;
- la figure 4 représente une trame de signal formée dans le circuit de codage de la figure 3 ;
- la figure 5 est un bloc-diagramme d'un synthétiseur inclus dans l'émetteur de la figure 1 ;
- la figure 6 est un bloc-diagramme d'un analyseur inclus dans le récepteur de la figure 2 ;
- la figure 7 est un bloc-diagramme d'un circuit d'identification inclus dans le récepteur de la figure 2 ; et
- la figure 8 est un bloc-diagramme d'un circuit de décodage inclus dans le récepteur de la figure 2.

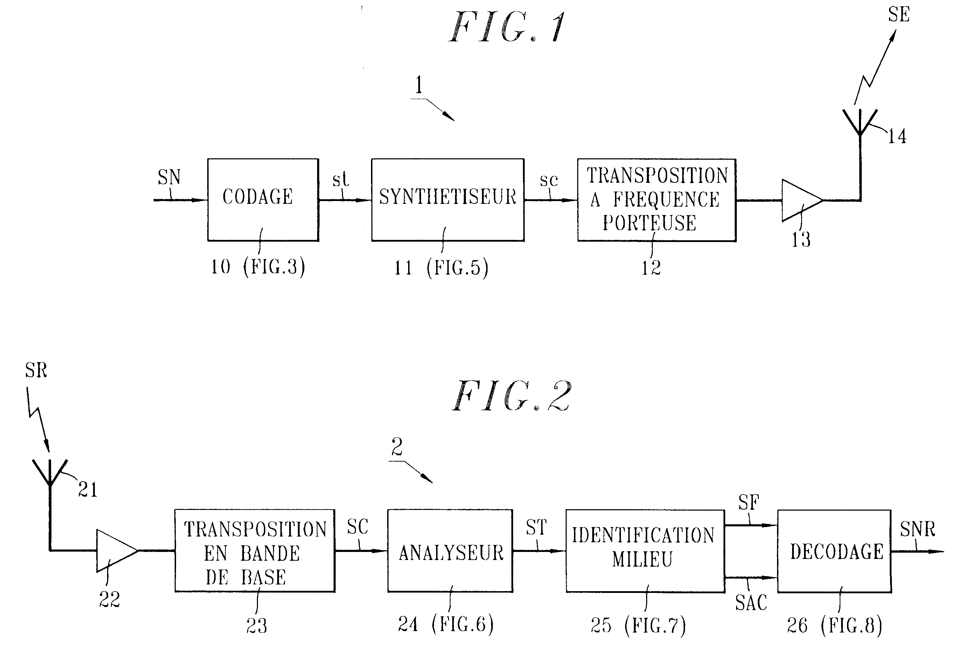

En référence aux figures 1 et 2, un système de transmission numérique selon l'invention par liaison sur support radioélectrique et/ou hertzien entre deux stations terrestres comprend d'une part un émetteur 1 pour coder un signal numérique SN en un signal SE émis par une antenne 14 vers l'ionosphère constituant le milieu de propagation, et d'autre part un récepteur 2 pour recevoir par une antenne 21 un signal SR résultant de la transmission du signal SE dans le milieu de propagation et décoder le signal SR en un signal numérique régénéré SNR.

Comme montré à la figure 1, l'**émetteur 1** reçoit le signal numérique à émettre SN dans un circuit de codage 10 qui transforme le signal SN en un signal tramé st, comme détaillé dans la suite. La sortie du circuit de codage 10 est reliée à l'entrée d'un synthétiseur 11. Le synthétiseur filtre le signal st dans des sous-bandes de fréquence et produit un signal synthétisé codé sc. Un circuit de transposition à fréquence porteuse 12 transpose à une fréquence porteuse prédéterminée le signal sc qui est ensuite amplifié par un amplificateur 13 pour produire le signal d'émission SE émis par l'antenne 14.

Le signal émis a par exemple une bande de fréquence utile inférieure à 10 % de la fréquence porteuse de manière à réaliser une transmission en bande étroite.

Comme montré à la figure 2, le **récepteur 2** réalise des opérations réciproques de celles effectuées par l'émetteur 1. Une antenne 21 associée à un amplificateur 22 reçoit le signal SR et l'applique à l'entrée d'un circuit de transposition en bande de base 23 qui produit un signal reçu codé en bande de base SC. Le signal SC entre dans un analyseur 24 qui reconstitue un signal tramé ST. A la sortie de l'analyseur 24 est relié un circuit d'identification de milieu de propagation 25 qui corrige le signal ST en fonction de perturbations apportées par le milieu de propagation pour produire un signal corrigé SAC et un signal SF qui est porteur du carré du module de la fonction de transfert estimée du milieu de propagation. Les signaux SF et SAC sont appliqués à un circuit de décodage 26 qui reconstitue le signal numérique reçu SNR.

En référence à la figure 3, le **circuit de codage 10** comprend en entrée un codeur 101 qui code des mots de données du signal numérique SN. A titre d'exemple, le codage est un codage linéaire de correction d'erreur en bloc de type Reed-Solomon. Le codeur 101 produit un signal numérique résultant sr composé de symboles d'information et de contrôle qui sont des blocs ayant un nombre prédéterminé r de bits, avec r entier positif. Un tel codage élimine des erreurs isolées et erratiques qui surviennent même dans des conditions de bonne propagation.

Puis un entrelaceur 102 entrelace par exemple de manière convolutive les symboles du signal sr afin d'introduire de la diversité temporelle et ainsi protéger le signal contre des erreurs en paquet. L'entrelaceur 102 comprend principalement un démultiplexeur d'entrée 121 et un multiplexeur de sortie 122 commandés en synchronisme ainsi qu'une batterie de I registres à décalage parallèles $R_0$ à $R_{I-1}$ ayant des entrées et sorties reliées respectivement à I sorties du démultiplexeur d'entrée et à I entrées du multiplexeur de sortie. Le démultiplexeur d'entrée 121 démultiplexe de manière convolutive I symboles du signal sr. Les registres $R_0$ à $R_{I-1}$ imposent respectivement des retards suivant une progression arithmétique de raison égale à j symboles ; ainsi, le registre $R_0$ n'introduit pas de retard, le registre $R_1$ introduit un retard de j symboles, et d'une manière générale le registre $R_i$ introduit un retard de i x j symboles, avec $0 \leqq i \leqq I - 1$. De préférence, le produit j x I est supérieur à la longueur r des symboles du signal sr. A des entrées de sélection du multiplexeur de sortie 122 sont appliquées des adresses des sorties des registres, non pas selon l'ordre croissant naturel 0 à I-1 comme aux entrées de sélection du démultiplexeur d'entrée, mais selon un ordre prédéterminé afin que, dans le signal d'entrelacement sr en sortie du multiplexeur, les retards imposés par les registres soient maintenus pour les symboles respectifs. Par exemple, pour des séquences successives $...e_0\}$, $\{a_1, b_1, c_1, d_1, e_1\}$, $\{a_2, b_2, c_2, d_2, e_2\}$ et $\{a_3, b_3, c_3, d_3, e_3\}$, dans le signal sr avec I = 5 et j = 2, le signal sre est tel que $[...a_2, c_1, e_0, b_2, d_1, a_3, c_2, e_1, b_3, d_2, a_4, c_3, e_2...]$.

Dans un circuit de modulation codée 103, le signal d'entrelacement sre subit une modulation à haute efficacité spectrale avec une constellation de $2^K$ états, K étant un entier positif valant à titre d'exemple 2, 4, 6 ou 8. Après une conversion série-parallèle du signal sre en des mots à K bits parallèles, chacun de ces mots est appliqué dans un modulateur à $2^K$ phases, équiréparties dans le plan de Fresnel. En variante, afin d'améliorer l'efficacité spectrale, la modulation est du type modulation amplitude/phase, par exemple du type modulation d'amplitude en quadrature MAQ à $2^4 = 16$ états.

Par exemple, pour un codage à $2^4 = 16$ états, chaque mot à quatre bits parallèles est séparé en deux mots à deux bits parallèles. Le premier mot à deux bits sélectionne l'une des quatre sous-constellations à 4 états dans un codeur convolutif. Le second mot à deux bits n'est pas codé et sélectionne un état respectif de la sous-constellation sélectionnée dans un modulateur de phase qui délivre un signal modulé sm avec $2^K$ états, dits symboles de modulation.

Puis un second entrelaceur 104, similaire à l'entrelaceur 102 précédemment décrit, entrelace des symboles du signal sm issu du circuit de modulation codée 103. Le circuit 104 délivre un signal entrelacé sme à l'entrée d'un circuit de formatage 105.

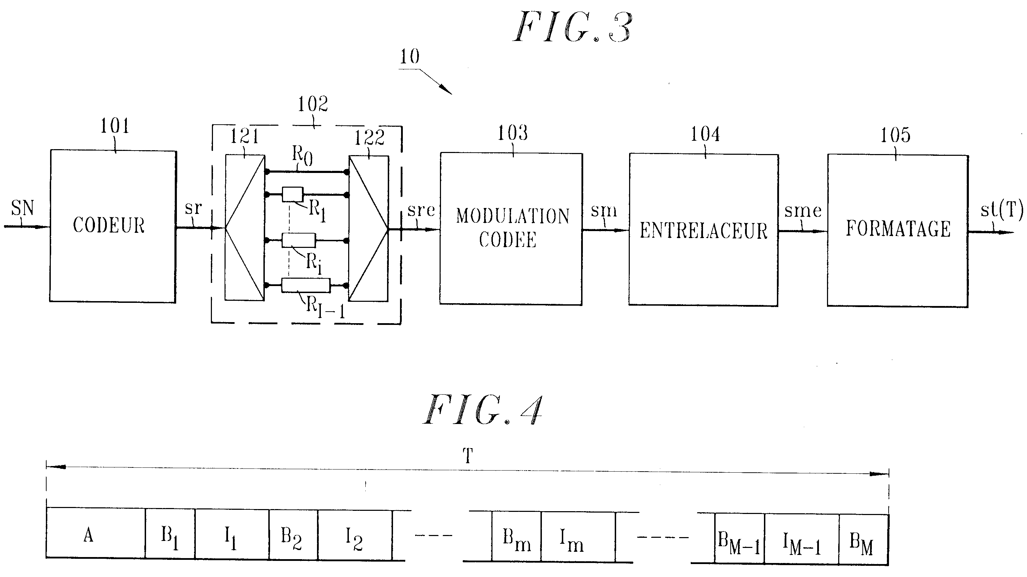

Le circuit de formatage 105 produit un signal tramé st à partir du signal sme comme montré à la figure 4. Une trame T du signal st comprend en entête, une séquence de synchronisation de trame A comprenant NA symboles, puis (M-1) champs d'information $[B_1, I_1]$ à $[B_{M-1}, I_{M-1}]$ composés chacun d'un mot de référence et d'un paquet d'information, et un dernier mot de référence $B_M$.

La séquence A est classiquement utilisée dans le récepteur 2 pour détecter des trames reçues et les synchroniser. La séquence A est par exemple basée sur une séquence pseudo-aléatoire de longueur inférieure à NA et répétée périodiquement sur les NA symboles de la séquence A, qui sont des symboles de modulation à $2^K$ états analogues aux symboles d'information.

Le mot de référence $B_m$, avec $1 \leq m \leq M$ et m et M entiers positifs, comprend NB symboles et est par exemple composé par une séquence binaire pseudo-aléatoire de longueur maximale dont les propriétés statistiques sont celles d'un bruit coloré, ou bruit blanc à bande limitée. Les symboles du mot de référence $B_m$ sont également des symboles de modulation à $2^K$ états analogues aux symboles d'information. Les mots de référence sont utilisés par le circuit d'identification de milieu de propagation 25 dans le récepteur qui sera détaillé dans la suite.

Le paquet d'information $I_m$ du champ d'information $[B_m, I_m]$ contient des symboles d'information successifs du signal sme en un nombre prédéterminé NI. La longueur des paquets d'information est par exemple égale à 16 fois la longueur des mots de référence.

La longueur de la trame, le nombre de mots de référence $B_m$ dans la trame et la longueur respective des paquets d'information $I_m$ et des mots de référence dépendent des caractéristiques du milieu de propagation et du débit souhaité pour la transmission.

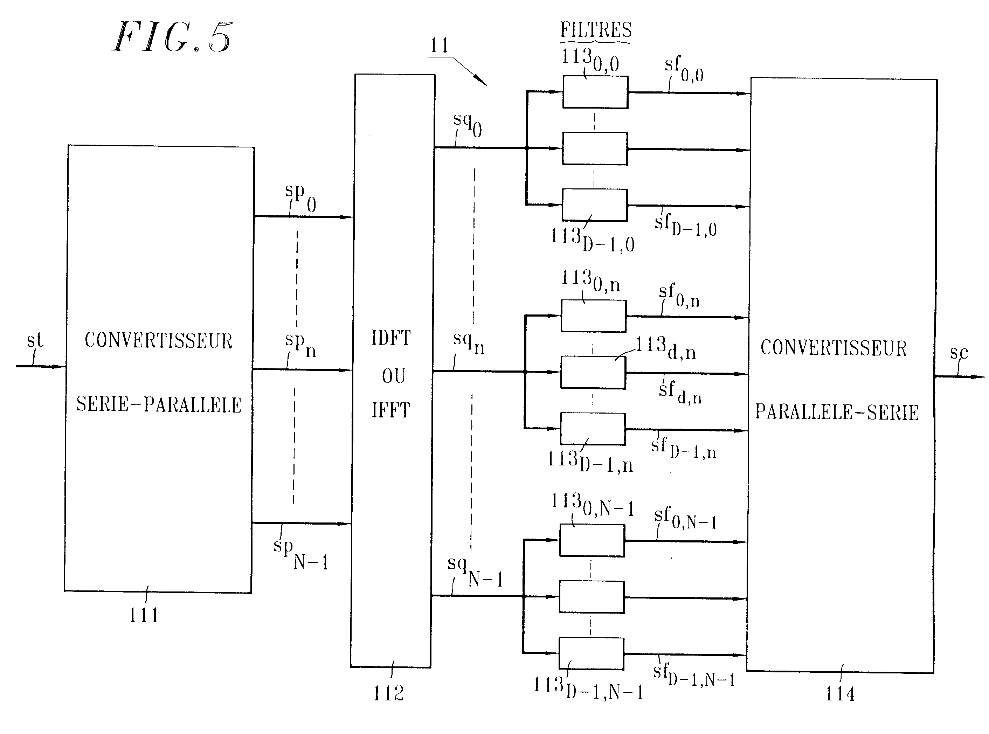

Le signal st est transmis au **synthétiseur 11** qui est maintenant détaillé en référence à la figure 5. Le synthétiseur 11 comprend en entrée un convertisseur série-parallèle 111 à N sorties, un transformateur de Fourier inverse à N points 112 qui réalise une transformation de Fourier discrète inverse (IDFT) ou une transformation de Fourier rapide inverse (IFFT), un banc de N groupes de D filtres numériques parallèles polyphasés $113_{0,0}$ - $113_{D-1,0}$ à $113_{0,N-1}$ - $113_{D-1,N-1}$, tous les filtres ayant une largeur de bande identique, et enfin un convertisseur parallèle-série 114 à DxN entrées.

Le signal numérique entrant st dans le synthétiseur 11 est tout d'abord converti en N signaux parallèles $sp_0$ à $sp_{N-1}$ par le convertisseur 111, qui les applique au transformateur 112. A un instant donné, toute séquence entrante à N éléments parallèles $\{sp_n\}$, avec $0 \leq n \leq N-1$ et n et N entiers positifs, est transformée en une séquence $\{sq_n\}$ à N éléments parallèles qui sont appliqués aux filtres $113_{0,0}$ à $113_{D-1,N-1}$. Chaque élément de signal $sq_n$ de la séquence transformée est filtré par D filtres $113_{0,n}$ à $113_{D-1,n}$, l'indice n étant compris entre O et l'entier N-1. Les DxN éléments parallèles de la séquence filtrée $\{sf_{d,n}\}$ sont convertis en le signal sc par le convertisseur 114. Le signal sc présente ainsi DxN sous-bandes consécutives ayant des largeurs identiques correspondant à DxN sous-porteuses, bien qu'en variante les largeurs des sous-bandes peuvent être a priori différentes.

Comme déjà dit, le signal sc est transposé à une fréquence porteuse par le circuit 12, puis est amplifié par l'amplificateur 13 et émis par l'antenne 14.

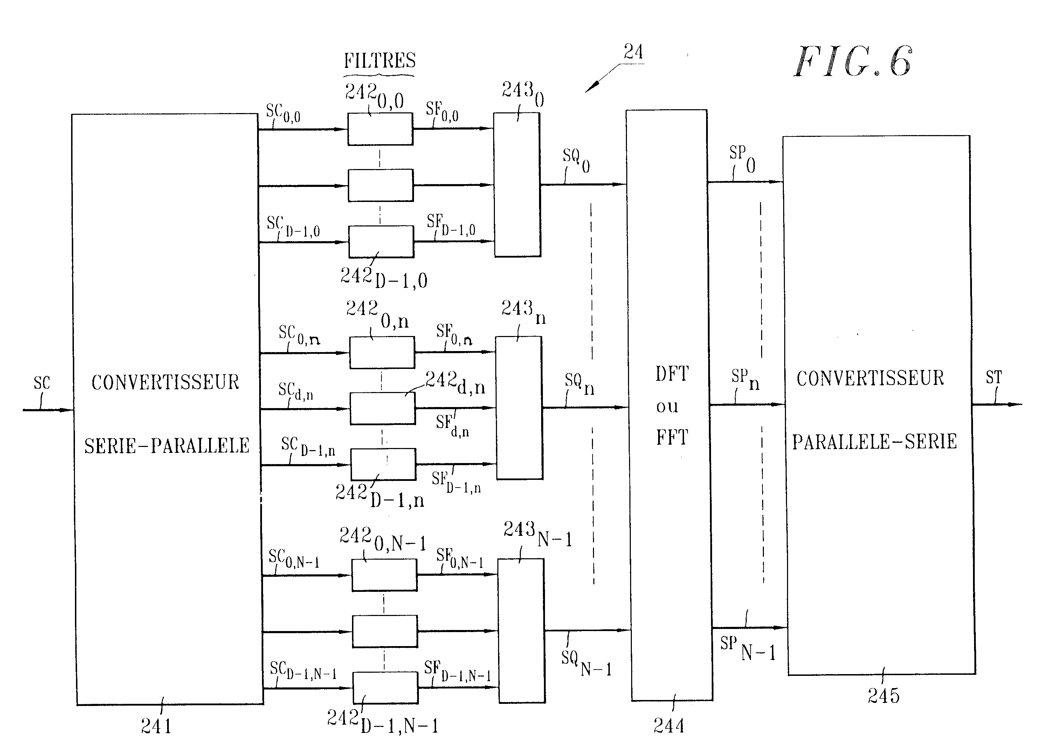

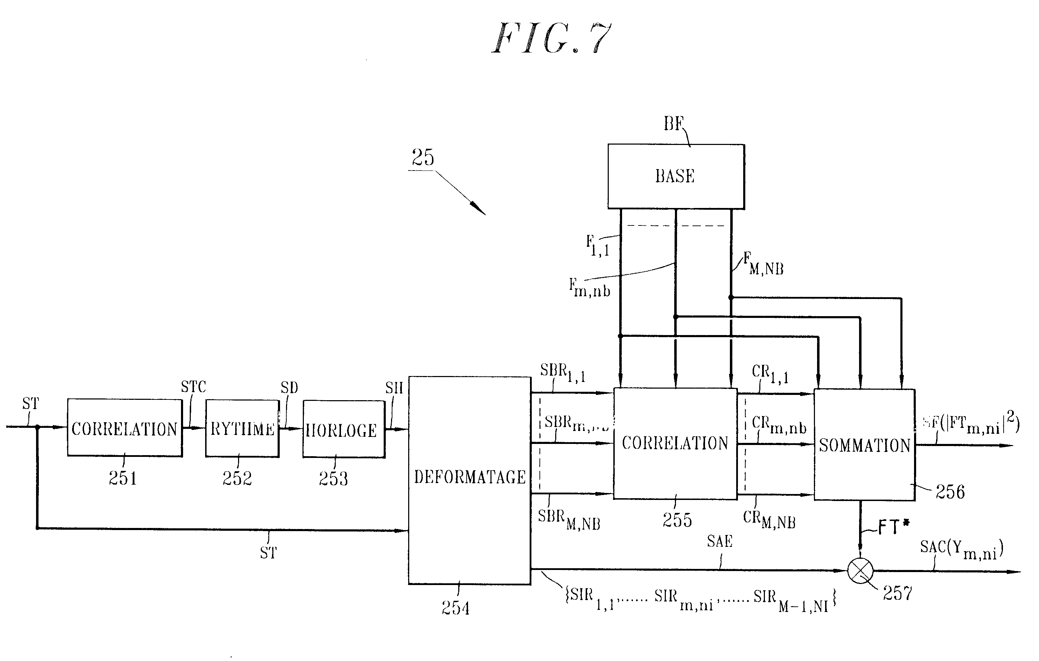

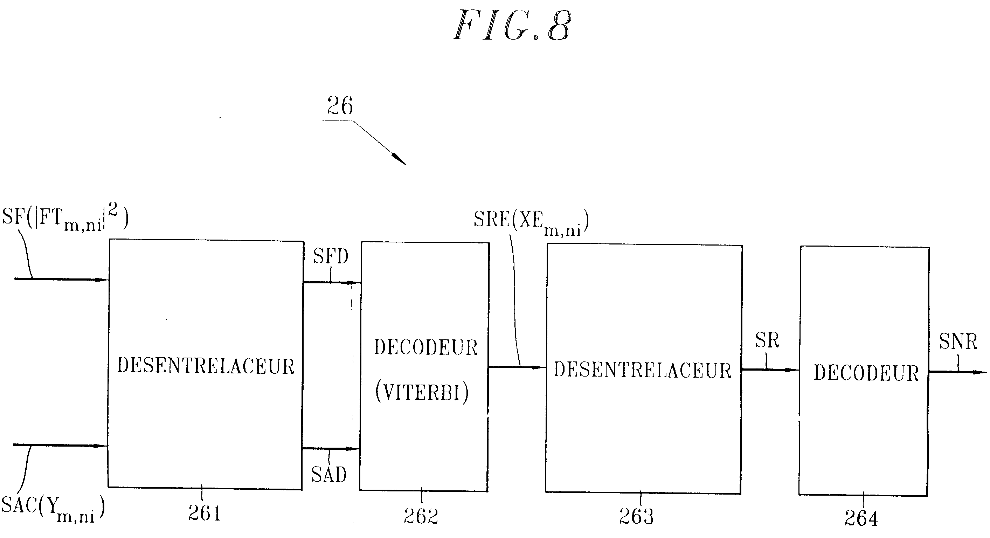

Dans le récepteur 2, l'**analyseur 24** correspond au synthétiseur 11 montré à la figure 5 et est détaillé à la figure 6. L'analyseur 24 comprend un convertisseur série-parallèle 241 à DxN sorties, un banc de N groupes de D filtres numériques parallèles polyphasés $242_{0,0}$ - $242_{D-1,0}$ à $242_{0,N-1}$ - $242_{D-1,N-1}$ dont les entrées sont reliées aux sorties du convertisseur 241. Les sorties des D filtres dans chaque groupe sont reliées à l'un respectif de N convertisseurs parallèle-série $243_0$ à $243_{N-1}$. L'analyseur 24 comprend en sortie un transformateur à transformation de Fourier discrète (DFT) ou rapide (FFT) à N points 244 ayant N entrées reliées respectivement aux sorties des convertisseurs $243_0$ à $243_{N-1}$ et N sorties reliées à un convertisseur parallèle-série 245 produisant le signal tramé ST.

Une séquence du signal codé reçu en bande de base SC est décomposée en D x N éléments parallèles $SC_{0,0}$ à $SC_{D-1,N-1}$ par le convertisseur 241. Ces éléments sont filtrés par les filtres $242_{d,n}$ respectivement en des éléments filtrés $SF_{0,0}$ à $SF_{D-1,N-1}$ qui sont convertis en des éléments $SQ_0$ à $SQ_{N-1}$ par les convertisseurs $243_0$ à $243_{N-1}$. Après transformation de ces éléments par le transformateur 244 en des éléments $SP_0$ à $SP_{N-1}$ et conversion parallèle-série de ces derniers éléments, l'analyseur 24 délivre le signal ST au circuit d'identification de milieu 25 qui est décrit dans la suite.

Le signal ST est un signal tramé correspondant au signal st précédemment décrit. Une trame du signal ST comprend une séquence de synchronisation de trame AR, correspondant à la séquence A reçue, des mots de référence $BR_m$, avec $1 \leqq m \leqq M$ et M entier positif, correspondant aux mots $B_m$ reçus et M-1 paquets d'information reçus $IR_m$, avec $1 \leqq m \leqq M-1$.

En référence à la figure 7, le **circuit d'identification de milieu de propagation 25** comprend un circuit de corrélation 251 qui synchronise les trames du signal ST en corrélant la séquence de synchronisation AR avec une séquence A1 identique à la séquence A précédemment décrite, par exemple constituée par une séquence pseudo-aléatoire de même longueur que la séquence A.

Le circuit de corrélation 251 délivre un signal tramé corrélé STC à un circuit de récupération de rythme 252 qui détermine le déphasage entre la séquence de synchronisation AR correlée et une séquence A2 identique aux séquences A et A1. Le circuit 252 délivre un signal SD qui commande un circuit d'horloge 253 qui est une boucle à verrouillage de phase numérique. Le circuit d'horloge 253 délivre un signal d'horloge SH qui synchronise un circuit de déformatage 254, auquel est appliqué le signal ST. Le circuit de déformatage 254 effectue un traitement inverse à celui dans le circuit de formatage 105 inclus dans le circuit de codage 10 en référence à la figure 3. Pour une trame reçue, le circuit 254 en extrait d'une part NB x M symboles de référence $SBR_{1,1}$ à $SBR_{M,NB}$ qui sont contenus dans les M mots de référence $BR_1$ à $BR_M$ de la trame et qui sont appliqués à un circuit de corrélation 255, et d'autre part NI x (M-1) symboles d'information $SIR_{1,1}$ à $SI_{M-1,NI}$ qui sont stockés en mémoire tampon pendant le calcul suivant de la fonction de transfert. Le circuit 255 établit les produits de corrélation des symboles de référence $SBR_{m,nb}$, où $1 \leqq m \leqq M$ et $1 \leqq nb \leqq NB$, respectivement avec NB x M fonctions $F_{1,1}$ à $F_{M,NB}$ qui constituent une base BF de fonctions orthogonales précalculées à support borné en temps et en fréquence et qui sont lues dans un circuit logique programmable de base de fonctions BF.

Les produits de corrélation des symboles de référence avec les fonctions de la base ont pour résultat NBxM coordonnées $CR_{1,1}$ à $CR_{M,NB}$, qui représentent la décomposition des symboles de référence sur la base orthogonale BF. Les coordonnées $CR_{1,1}$ à $CR_{M,NB}$ sont appliquées par le circuit de corrélation 255 respectivement à des premières entrées d'un circuit de sommation 256 dont les secondes entrées reçoivent les fonctions $F_{1,1}$ à $F_{M,NB}$ afin de déterminer la fonction de transfert estimée FT du milieu de propagation relativement à la trame reçue, par calcul de la somme :

$$FT = \sum_{m=1}^{M} \sum_{nb=1}^{NB} [CR_{m,nb} \cdot F_{m,nb}] \cdot$$

Le circuit 256 établit le complexe conjugué FT* et le carré du module $|FT|^2$ de la fonction de transfert FT et les transmet respectivement à un multiplieur 257 et au circuit de décodage 26.

D'autre part, le circuit de déformatage 254 délivre au multiplieur 257 un signal SAE constitué des symboles $SIR_{m,ni}$ contenus dans les (M-1) paquets d'information reçus $IR_m$. Le multiplieur 257 multiplie les symboles d'information contenus dans la trame reçue du signal SAE par le complexe conjugué FT* de la fonction de transfert estimée du milieu relative à ladite trame reçue en le signal corrigé SAC.

La correction est basée sur le principe que la fonction de transfert du milieu de propagation est constante dans une bande de fréquence et un intervalle de temps donnés. Pour une trame reçue, le circuit d'identification 25 détermine ainsi la perturbation apportée par le milieu de propagation en calculant une fonction de transfert estimé du milieu grâce aux symboles de référence de la trame répartis dans la bande de fréquence donnée puisqu'ils sont formés à partir d'une séquence binaire pseudo-aléatoire, et dans l'intervalle de temps donné qui est la durée de la trame T. Le circuit 25 corrige les symboles d'information de la trame contenus dans les mêmes bande de fréquence et intervalle de temps donnés en les multipliant par le complexe conjugué FT* de la fonction de transfert afin d'inhiber l'effet néfaste de la perturbation apportée par le milieu de propagation. Le circuit 25 transmet au circuit décodeur 26 le signal SF porteur du carré du module de la fonction de transfert estimée du milieu et le signal SAC porteur des symboles d'information corrigés libérés des perturbations du milieu.

En variante, pour les symboles d'information reçu $SIR_{m,ni}$, le circuit 25 calcule des fonctions de transfert respectives à partir de sous-ensembles incluant un nombre prédéterminé de symboles de référence et correspondant à un intervalle de temps donné inférieur à la durée de la trame. Chaque symbole d'information reçu est corrigé dans le circuit 25 en le multipliant par le complexe conjugué de la fonction de transfert calculée à partir du sous-ensemble de symboles de référence qui peut être constitué de symboles de référence successifs précédant le symbole d'information ou encadrant le symbole d'information dans la trame. Dans ce cas, en réponse aux symboles d'information successifs, le signal SF est porteur successivement des carrés de modules des différentes fonctions de transfert estimées.

A titre d'exemple, pour chaque trame (M-1) fonctions de transfert $FT_1$ à $FT_{M-1}$ sont calculées respectivement à partir des symboles de référence contenus dans deux mots de référence consécutifs reçus, soit $BR_1$ et $BR_2$ encadrant le paquet d'information $IR_1$ pour la première fonction de transfert $FT_1$, $BR_m$ et $BR_{m+1}$ encadrant le $m^{ième}$ paquet d'information $IR_m$, pour la $m^{ième}$ fonction $FT_m$, et $BR_{M-1}$ et $BR_M$ encadrant le paquet d'information $IR_{M-1}$ pour la dernière fonction calculée $FT_{M-1}$. Les symboles d'information reçus contenus dans le paquet de rang m sont corrigés par multiplication avec le complexe conjugué de la fonction de transfert $FT_m$.

Dans tous les cas, quel que soit le nombre de fonctions de transfert calculées pour une trame, à un symbole d'information $SIR_{m,ni}$ d'une trame reçue, avec $1 \leq m \leq M-1$ et $1 \leq ni \leq NI$, est associée une fonction de transfert respective $FT_{m,ni}$.

En référence à la figure 8, le **circuit décodeur 26** réalise les opérations de désentrelacement et décodage inverses de celles du codeur 10 représenté à la figure 3 et comprend en cascade un premier désentrelaceur 261, un premier décodeur 262, un second désentrelaceur 263, et un second décodeur 264 qui délivre finalement le signal numérique régénéré SNR.

Le premier désentrelaceur 261 reçoit les signaux SAC et SF et effectue une réorganisation temporelle par couple de symboles du signal SAC et du signal SF correspondant à l'entrelacement effectué par l'entrelaceur 104 et transmet par couple de symboles parallèles des signaux désentrelacés SAD et SFD au premier décodeur 262 afin de maintenir l'association d'un symbole d'information corrigé $Y_{m,ni}$ avec la fonction de transfert de milieu $FT_{m,ni}$ ayant participée à la correction de ce symbole.

Le décodeur 262 décode le signal SAD avec un décodage de type Viterbi. Par exemple, pour une séquence de NIx(M-1) symboles $\{Y_{m,ni}\}$, avec $1 \leq m \leq M-1$ et $1 \leq ni \leq NI$, du signal SAC correspondant à une trame reçue, le décodeur reçoit également le complexe conjugué de la fonction de transfert depuis le circuit de sommation 256 à travers le désentrelaceur 261, et minimise un critère quadratique J selon la règle du maximum de vraisemblance sur l'ensemble $\{X_{m,ni}\}$ des symboles de la modulation à $2^K$ états qui peuvent résulter de la modulation codée du circuit 103, par rapport à l'ensemble des symboles d'information corrigés $\{Y_{m,ni}\}$ d'une trame reçue :

$$J = \min_{X_{m,ni}} \quad \sum_{m=1}^{M-1} \sum_{ni=1}^{NI} |FT_{m,ni}|^2 \cdot |Y_{m,ni}/|FT_{m,ni}|^2 - X_{m,ni}|^2$$

La valeur minimale de J sur les $\{X_{m,ni}\}$ détermine la séquence de symboles $\{XE_{m,ni}\}$ émise lorsque la séquence de symboles corrigés $f\{Y_{m,ni}\}$ a été reçue.

Le décodeur de Viterbi 262 transmet un signal SRE formé des symboles décodés $XE_{m,ni}$ au second désentrelaceur 263, analogue au désentrelaceur 261 et correspondant à l'entrelaceur 102. L'entrelaceur 263 effectue une réorganisation temporelle du signal SRE en un signal SR appliqué au second décodeur 264. Ce dernier réalise un décodage linéaire en bloc des symboles du signal SR en correspondance avec le codeur 101, par exemple un décodage de type Reed-Solomon, afin de constituer finalement le signal numérique régénéré SNR.

**Revendications**

**1 -** Procédé de correction d'un signal reçu résultant de la transmission d'un signal numérique émis à travers un milieu de propagation, caractérisé en ce que le signal émis comprend des symboles de référence ($B_m$) et des symboles d'information ($I_m$), et en ce que le procédé comprend la corrélation de symboles de référence ($SBR_{m,nb}$) du signal reçu par une base (BF) de fonctions orthogonales ($F_{m,nb}$) en des coordonnées ($CR_{m,nb}$), le calcul de la fonction de transfert (FT) du milieu de propagation en fonction desdites coordonnées, le calcul du complexe conjugué (FT∗) de ladite fonction de transfert, et la multiplication des symboles d'information ($SIR_{m,ni}$) du signal reçu par le complexe conjugué de la fonction de transfert.

**2 -** Procédé de correction de signal numérique conforme à la revendication 1, caractérisé en ce que le signal émis comprend alternativement des mots de référence incluant des symboles de référence en nombre

EP 0 650 277 A1

prédéterminé (NB) et des paquets d'information incluant des symboles d'information en nombre prédéterminé (NI).

**3** - Procédé de correction de signal numérique conforme à la revendication 1, caractérisé ce que le signal émis comprend des trames (T) comprenant une séquence de synchronisation de trame (A) et au moins un champ d'information ([$B_m$, $I_m$]) contenant un mot de référence ($B_m$) incluant des symboles de référence en nombre prédéterminé (NB) et un paquet d'information ($I_m$) incluant des symboles d'information en nombre prédéterminé (NI).

**4** - Procédé de correction de signal numérique conforme à l'une quelconque des revendications 1 à 3, caractérisé en ce que les symboles de référence ($B_m$) sont des séquences binaires pseudo-aléatoires de longueur maximale.

**5** - Dispositif de réception d'un signal reçu résultant de la transmission d'un signal numérique qui est émis à travers un milieu de propagation et qui comprend des symboles de référence et des symboles d'information, caractérisé en ce qu'il comprend un moyen (254) pour extraire du signal reçu les symboles de référence ($SBR_{m,nb}$) et les symboles d'information ($SIR_{m,ni}$), un moyen de corrélation (255) pour déterminer des coordonnées ($CR_{m,nb}$) des symboles de référence extraits sur une base (BF) de fonctions orthogonales, un moyen (256) pour sommer des produits desdites coordonnées et desdites fonctions orthogonales afin d'en déduire la fonction de transfert (FT) du milieu de propagation et le carré ($|FT|^2$) du module de ladite fonction de transfert et le complexe conjugué (FT∗) de ladite fonction de transfert, et un moyen (257) pour multiplier lesdits symboles d'information ($SIR_{m,ni}$) par le complexe conjugué de ladite fonction de transfert afin de former des symboles d'information corrigés ($Y_{m,ni}$).

**6** - Dispositif de réception de signal numérique conforme à la revendication 5, caractérisé en ce qu'il comprend un premier moyen désentrelaceur (261) pour désentrelacer les carrés de module de fonction de transfert ($SF(|FT_{m,ni}|^2)$) et les symboles d'information corrigés ($SAC(Y_{m,ni})$), premier moyen (262) pour décoder lesdits symboles d'information corrigés et désentrelacés notamment en fonction des carrés de module désentrelacés, un second moyen désentrelaceur (263) pour désentrelacer les symboles d'information décodés, et un second moyen (264) pour décoder les symboles d'information décodés et désentrelacés.

**7** - Dispositif de réception de signal numérique conforme à la revendication 6, caractérisé en ce que le premier moyen pour décoder (262) décode les symboles d'information corrigés et désentrelacés par minimisation d'un critère quadratique (J).

**8** - Dispositif de réception de signal numérique conforme à la revendication 6 ou 7, caractérisé en ce que le second moyen pour décoder (264) effectue un décodage linéaire en bloc des symboles d'information décodés et désentrelacés.

**9** - Dispositif d'émission de signal numérique vers un dispositif de réception conforme à l'une quelconque des revendications 5 à 8, caractérisé en ce qu'il comprend un moyen (101) pour coder un signal numérique (SN) en des symboles d'information, un premier moyen entrelaceur (102) pour entrelacer lesdits symboles d'information, un moyen (103) pour moduler les symboles d'information entrelacés, un second moyen entrelaceur (104) pour entrelacer les symboles d'information modulés, et un moyen de formatage (105) pour formater les symboles d'information modulés et entrelacés en un signal émis comprenant alternativement des symboles de référence ($B_m$) et les symboles d'information modulés et entrelacés ($I_m$).

**10** - Dispositif d'émission de signal numérique conforme à la revendication 9, caractérisé en ce que le moyen pour coder (101) effectue un codage linéaire en bloc du signal numérique à émettre (SN).

7

**FIG. 1**

SN → CODAGE (10 (FIG.3)) → st → SYNTHETISEUR (11 (FIG.5)) → sc → TRANSPOSITION A FREQUENCE PORTEUSE (12) → 13 → 14 → SE

1

**FIG. 2**

SR → 21 → 22 → TRANSPOSITION EN BANDE DE BASE (23) → SC → ANALYSEUR (24 (FIG.6)) → ST → IDENTIFICATION MILIEU (25 (FIG.7)) → SF, SAC → DECODAGE (26 (FIG.8)) → SNR

2

## FIG.3

EP 0 650 277 A1

SN → [101 CODEUR] → sr → [102 : 121 / R_0, R_1, R_i, R_{I-1} / 122] → src → [103 MODULATION CODEE] → sm → [104 ENTRELACEUR] → sme → [105 FORMATAGE] → st(T)

10

## FIG.4

| A | B_1 | I_1 | B_2 | I_2 | - - - | B_m | I_m | - - - - | B_{M-1} | I_{M-1} | B_M |

T

FIG.5

*FIG. 6*

# FIG.7

EP 0 650 277 A1

## FIG.8

26

$SF(|FT_{m,ni}|^2)$ → DESENTRELACEUR (261) → SFD / SAD → DECODEUR (VITERBI) (262) → $SRE(XE_{m,ni})$ → DESENTRELACEUR (263) → SR → DECODEUR (264) → SNR

$SAC(Y_{m,ni})$

EP 0 650 277 A1

EP 0 650 277 A1

**RAPPORT DE RECHERCHE EUROPEENNE**

Numero de la demande

EP 94 40 2234

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | CSELT TECHNICAL REPORTS, vol.XVII, no.2, Avril 1989, ITALY pages 125 - 131 G.D ARIA & V.ZINGARELLI 'SYNCHRONIZATION TECHNIQUES AND VITERBI EQUALIZERS FOR TDMA MOBILE RADIO' | 1-4 | H04L5/06 H04B7/005 |
| A | * abrégé * * page 127, colonne de gauche, ligne 8 - ligne 31 * * page 128, colonne de gauche, ligne 13 - page 129, colonne de droite, ligne 7 * * figures 1,3,4,9 * --- | 5 | |
| A | PROCEEDINGS OF IEEE GLOBECOM 89 27-30 November 1989, Dallas (US) NEW YORK (US) pages 428-432, J.C.RAULT ET AL. "THE CODED ORTHOGONAL FREQUENCY DIVISION MULTIPLEXING (COFDM) TECHNIQUE, AND ITS APPLICATION TO DIGITAL RADIO BROADCASTING TOWARDS MOBILE RECEIVERS" * page 429, colonne de gauche, ligne 4 - ligne 53 * * page 429, colonne de droite, ligne 7 - page 430, colonne de droite, ligne 4 * * page 430, colonne de droite, ligne 24 - ligne 61 * * figure 5 * --- -/-- | 5,6,9 | DOMAINES TECHNIQUES RECHERCHES (Int.Cl.6) H04L H04B |

Le présent rapport a été établi pour toutes les revendications

| Lieu de la recherche | Date d'achèvement de la recherche | Examinateur |
|---|---|---|
| LA HAYE | 31 Janvier 1995 | Lydon, M |

EPO FORM 1503 03.82 (P04C02)

14

**Office européen des brevets**

# RAPPORT DE RECHERCHE EUROPEENNE

Numero de la demande

EP 94 40 2234

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PROCEEDINGS OF IEEE GLOBECOM 92<br>6-9 December 1992, Orlando (US)<br>NEW YORK (US)<br>pages 1694-1698,<br>M.SAITO ET AL.<br>"A DIGITAL MODULATION METHOD FOR TERRESTIAL DIGITAL TV BROADCASTING USING TRELLIS CODED OFDM AND ITS PERFORMANCE"<br>* page 1694, colonne de droite, ligne 13 - page 1695, colonne de droite, ligne 7 *<br>* figures 2,3 *<br>--- | 5,9 | |
| A | EUROPEAN TRANSACTIONS ON TELECOMMUNICATIONS AND RELATED TECHNOLOGIES,<br>vol.3, no.3, Mai 1992, MILANO IT<br>pages 255 - 264, XP304924<br>N.J.FLIEGE 'ORTHOGONAL MULTIPLE CARRIER DATA TRANSMISSION'<br>* page 256, colonne de droite, ligne 21 - page 257, colonne de gauche, ligne 7 *<br>* page 258, colonne de gauche, ligne 9 - ligne 11 *<br>* page 258, colonne de droite, ligne 23 - page 259, colonne de gauche, ligne 12 *<br>* figures 2,4 *<br>----- | 5 | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 31 Janvier 1995 | Lydon, M |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                   

& : membre de la même famille, document correspondant

EPO FORM 1503 03.82 (P04C02)